Europäisches Patentamt

European Patent Office

Office européen des brevets

(11) Publication number: **0 196 809**
**B1**

# EUROPEAN PATENT SPECIFICATION

(45) Date of publication of the patent specification:
**14.06.89**

(51) Int. Cl.⁴: **G 21 F 9/30**

(21) Application number: **86301822.2**

(22) Date of filing: **13.03.86**

(54) Apparatus for melting waste.

(30) Priority: **14.03.85 JP 49367/85**
**15.03.85 JP 50554/85**
**19.03.85 JP 53273/85**

(43) Date of publication of application:
**08.10.86 Bulletin 86/41**

(45) Publication of the grant of the patent:
**14.06.89 Bulletin 89/24**

(84) Designated Contracting States:
**DE FR GB**

(56) References cited:
**DE-A- 2 033 074**
**FR-A- 2 214 092**
**FR-A- 2 357 842**
**FR-A- 2 466 730**

(73) Proprietor: **NGK INSULATORS, LTD., 2-56, Suda-cho, Mizuho-ku, Nagoya-shi, Aichi 467 (JP)**

(72) Inventor: **Yoshida, Shuichi, 210 Nippon Gaishi Shingu Kazoka Apartment 106, Shingu-Cho 1-ch. Handa City Aichi Pref. (JP)**
Inventor: **Sawada, Eiji, 3-4 Midorigaoka 11-chome, Handa City Aichi Pref. (JP)**
Inventor: **Jinno, Akio, 28, Aza-Kanokoda 1-chome Taketoyo-cho, Chita-gun Aichi Pref. (JP)**

(74) Representative: **Paget, Hugh Charles Edward et al, MEWBURN ELLIS & CO. 2/3 Cursitor Street, London EC4A 1BQ (GB)**

## Description

The present invention relates to an apparatus for melting waste such as radioactive waste.

In treatment of the radioactive waste contaminated by the radioactivity generated in radioactive material handling installations such as an atomic power plant, it is well known to incinerate combustible waste to ashes and then store the ashes in a suitable place after filling them into a drum or the like. However, these incinerated ashes are in powdery granular form, so that it is desirable to stabilize the incinerated ashes and to reduce their volume when they are filled into the drum for transporting and storing. This treatment of ashes has been studied in various ways.

Various methods of treating the radioactive waste have been proposed and the following two are typical; namely, a first method in which the radioactive waste or incinerated ashes are solidified by mixing with cement and a second method in which the radioactive waste or incinerated ashes are solidified by mixing with asphalt, plastics or the like.

In the first method of solidifying with cement, however, in order to obtain a solid body having a stable density and strength by mixing the waste or ashes with cement, it is necessary to add cement to the ashes in a weight ratio of more than 4. Accordingly, there is the disadvantage that the volume of the treated solid body is very much larger than the volume of ashes being treated. In the second method of solidifying with asphalt and plastics, pretreatments such as removing and crushing of metal pieces in the waste or incinerated ashes are required and the facilities for carrying such treatment become complicated and large.

Recently, there has been proposed a third method of melting and solidifying the waste and ashes. This third method can effectively remove the disadvantages in the above first and second methods. In the third method, a high temperature for melting the wastes or incinerated ashes is attained by heating a metal vessel by means of electromagnetic induction but this temperature is limited to 1,000–1,200 °C, so that a melting treatment of waste and the like having a melting point higher than this limited heating temperature is impossible.

An object of the invention is to eliminate the above disadvantages and to provide an apparatus which can melt radioactive waste or icinerated ashes even at a temperature of 1,300–1,600 °C and can convert them into a stable treated solid body of reduced volume suitable for transportation and storage.

According to the present invention, apparatus for melting waste comprises a furnace body including a sidewall made of electrically non-conductive material, an upper lid secured to the upper end of the sidewall gastightly and provided with a waste supply inlet and a discharge outlet for exhaust gas and a bottom plate for closing the bottom of the furnace body; an induction heating coil provided at an outer peripheral portion of the sidewall; and a waste melting vessel made of conductive ceramic material and placed on the bottom plate within said furnace body.

By the invention it is possible continously to melt waste with high efficiency, and in continuous melting the discharge of the melt can be regulated to be continuously or optionally performed.

Apparatus of the invention for melting the waste which can be provided can incinerate and melt the waste simultaneously.

The apparatus may further comprise one or more additional rod-shaped internal heating elements made of conductive ceramic material arranged in the waste melting vessel of conductive ceramic material in order that the required high temperature can be reached in a short time. The conductive ceramic material fis preferably a C-SiC based or a $C-Al_2O_3$ based ceramics. It is preferable to provide an oxygen supply pipe extending through the top of the furnace body into the waste melting vessel for supplying an oxygen containing gas in order to incinerate and melt the waste simultaneously. Furthermore, means for sensing the melt condition in the vessel may be provided on the top of the furnace body.

In one preferred embodiment of the invention, the bottom plate of the furnace body may be arranged to move vertically from an elevated position closing the bottom of the furnace body to a descended position for removing th waste melting vessel containing the solidified waste, in order to permit melting and solidification of the waste in the melting vessel in a batch process.

Alternatively the waste melting vessel may be provided with a melt discharge pipe at the bottom thereof, the discharge pipe extending through the bottom plate of the furnace body downwardly in order to permit continuous melting of the waste in the vessel and discharge of the melt from the vessel via the discharge pipe.

According to the invention, the waste melting vessel is made of conductive ceramic material, such as a C-SiC based ceramics, a $C-Al_2O_3$ based ceramics or the like, so that the vessel itself generates heat by induction heating to enable melting of the waste charged into the melting vessel by the heat of the melting vessel effectively and safely even within the high temperature range of 1,300–1,600 °C.

Embodiments of the invention are described below by way of example with reference to the accompanying drawings, in which:

Fig. 1 is a vertical sectional view showing one embodiment of the melting and solidifying apparatus according to the invention;

Fig. 2 is a vertical sectional view of part of a variation of the apparatus shown in Fig. 1;

Fig. 3 is a vertical sectional view showing another embodiment of the continuous waste melting apparatus according to the invention;

Fig. 4 is a vertical sectional view of part of a variation of the apparatus shown in Fig. 3;

Fig. 5 is a vertical sectional view showing yet another embodiment of the continuous waste meltung apparatus according to the invention; and

Fig. 6 and Fig. 7 are vertical sectional views of parts of variations of the apparatus shown in Fig. 5.

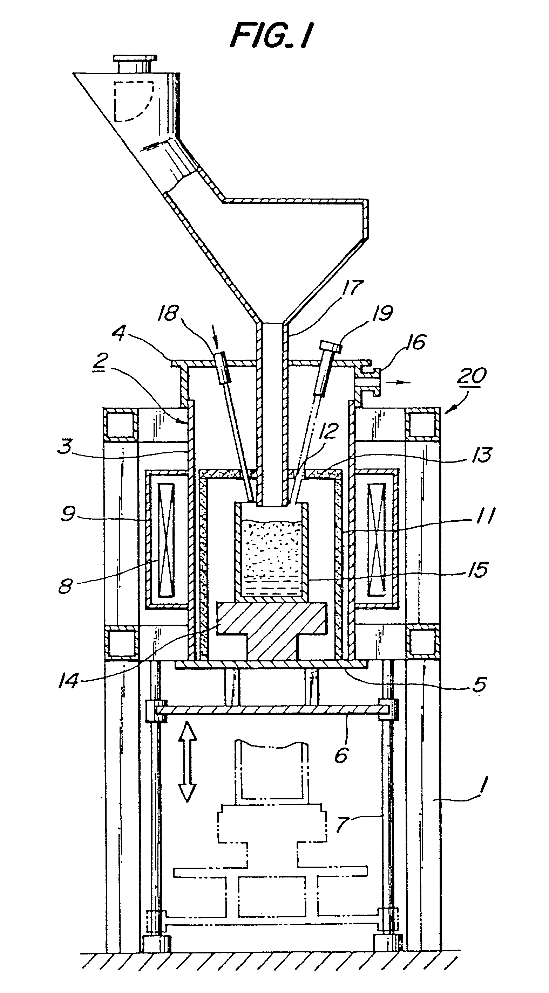

In the apparatus 20 of Fig. 1, a support frame 1 is built up vertically from a base to support a furnace body 2 at an elevated position. The furnace body 2 is a closed and gastightly sealed container, having a cylindrical sidewall 3 made of nonmetallic material such as quartz, a metal top or cover 4 secured to the upper end of the sidewall and a movable bottom plate 5 openably closing the bottom of the furnace body. The bottom plate 5 is supported on a lift 6 which is guided by vertical guides 7 and driven by means of a conventional driving device such as a motor or the like (not shown) so as to be moved up and down. An induction heating coil 8 is provided on the outer periphery of the sidewall 3. The induction heating coil 8 is covered by a cover 9 and cooled by a known cooling method such as air cooling or water cooling.

A cylindrical heat insulating wall 11 made of heat insulating material such as asbestos, castable refractories or the like is provided inside the sidewall 3 of the furnace body 2. A heat insulating lid 13 provided with a hole 12 is secured to the upper end of the heat insulating wall 11. The wall 11 and lid 13 may be fixed to and supported by the furnace body 2 or the support frame 1.

There is a support 14 made of nonmetallic material such as a heat insulating material fixed on the bottom plate 5. On the support 14 is placed a waste melting vessel 15 made of electrically conductive ceramic material, preferably a C-SiC based or a C-Al$_2$O$_3$ based ceramics. The vessel 15 can be moved vertically together with the support 14 on the bottom plate 5 and is thus insertable inside the heat insulating wall 11 from the lower end thereof. An exhaust gas discharge outlet 16 is provided at the upper portion of the furnace body 2 so as to discharge to the outside exhaust gas and the like which is generated during the operation of melting and passes up through the hole 12 provided in the heat insulating lid 13.

The top 4 of the furnace body 2 is provided with a waste supply inlet 17 for supplying radioactive waste and the like to the waste melting vessel 15 and an oxygen supply pipe 18 for supplying oxygen-containing gas necessary for completely incinerating the waste or the non-incinerated parts in the incinerated ashes supplied to the vessel 15, as necessary. There is also provided a radiation thermometer for sensing the melt condition in the vessel 15, a level gauge and a sensor 19 such as a monitor TV or the like, passing through the top 4.

In the radioactive waste melting and solidifying apparatus 20 described above, when an electric current is supplied to the induction heating coil 8, the waste melting vessel 15 made of conductive ceramic material is directly heated, and hence the waste can be melted within a high temperature range of 1,300–1,600 °C. When the amount of melt in the vessel 15 becomes a predetermined quantity, the furnace body 2 is cooled by natural cooling or the like and when the melt is solidified in the vessel 15, this vessel 15 is moved down by the lift 6 and removed from the support 14. A new vessel 15 is then placed on the support 14 and the above steps may be repeated.

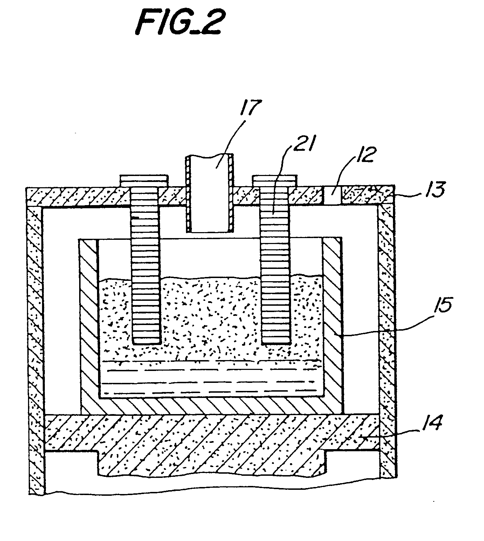

Fig. 2 shows another embodiment of the melting and solidifying apparatus shown in Fig. 1, in which the same parts as those of the embodiment shown in Fig. 1 are denoted by the same reference numerals. The description of such parts is not repeated. In this embodiment, in order to improve the efficiency of the induction heating of the waste melting vessel 15 made of conductive ceramic material, rod-shaped internal heating elements 21 made of electrically conductive ceramic material are inserted into the waste melting vessel and supported by the heat insulating lid 13. In this construction, the electromagnetic radiation of the induction heating also acts upon the internal heating elements 21 and a temperature of 1,300–1,600 °C can be obtained in a short time.

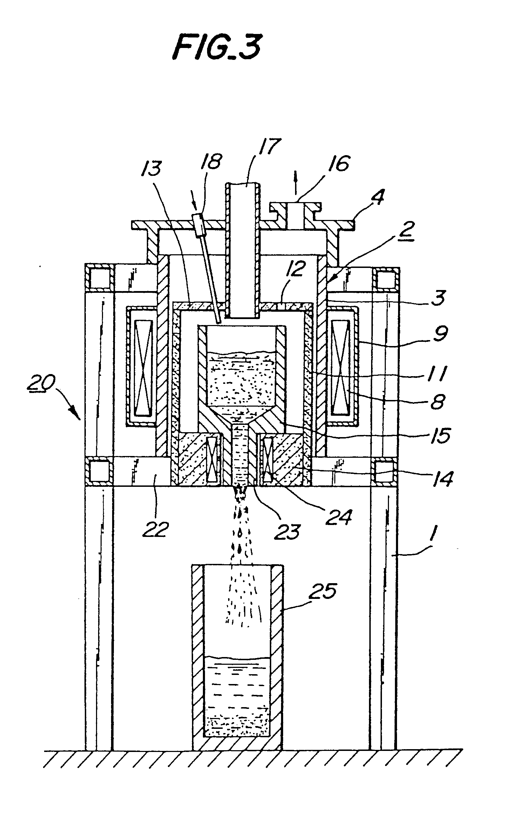

Fig. 3 shows one embodiment for continuously melting radioactive waste, in which the same parts as those of the embodiment shown in Fig. 1 are denoted by the same reference numerals. Their explanation is not repeated.

In the present ermbodiment, the furnace body 2 has a bottom plate 22 rigidly secured to the support frame 1. The melting vessel 15 made of electrically conductive ceramic material is placed on the support 14 made of heat insulating material which is mounted within the heat insulating wall 11. The support 14 and the wall 11 are supported by the bottom plate 22. The melting vessel 15 has a melt discharge pipe 23 at its bottom. The melt discharge pipe 23 extends downwardly through holes formed at the central portions of the support 14 and the bottom plate 22.

The support 14 is provided with an induction heating coil 24 in a portion surrounding the melt discharge pipe 23 to provide a freeze valve operating by unfreezing for regulating the discharge of melt from the waste melting vessel 15. Further, a container 25 is placed under the discharge pipe 23 for receiving the flow of the melt discharged from the discharge pipe of the vessel 15.

In the continuous waste melting apparatus 20 of Fig. 3, when an electric current is supplied to the induction heating coil 8 to heat the waste melting vessel 15 by an induced current generated therein, the melting vessel 15 itself generates heat to reach a high temperature and continuously melts the waste with high efficiency. It is also possible using the above freeze valve that the discharge pipe 23 is heated by the induction heating coil 24 as a discharge regulating means only when the melt is to be discharged so as to discharge the melt, and the discharge pipe 23 is air-cooled on stopping this induction heating at the time for stopping the flow of the melt, so that the melt is cooled and solidified in the discharge pipe 23.

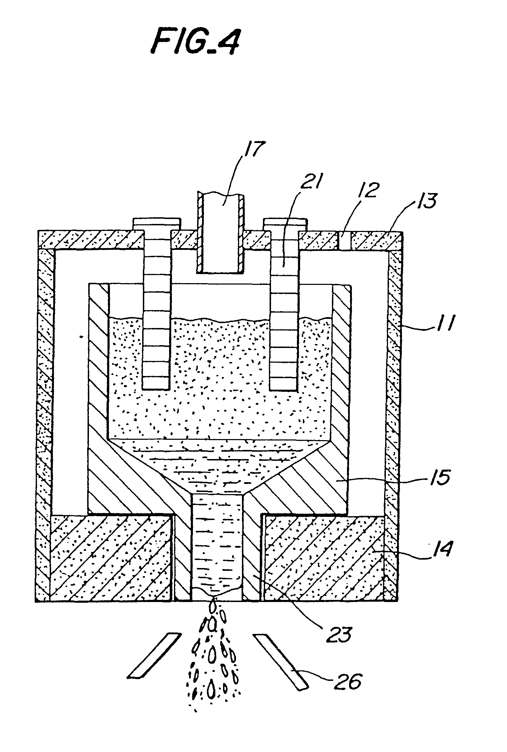

Fig. 4 shows another embodiment of the continuous waste melting apparatus shown in Fig. 3, in which the same parts as those of the embodiment shown in Fig. 3 are denoted by the same reference numerals and their explanation is not repeated. In this embodiment, in order to improve the effeciency of induction heating in the waste melting vessel 15, rod-shaped internal heating elements 21 made of electrically conductive ceramics material are inserted in the waste melting vessel 15 and suspended from the heat insulating lid 13. In this embodiment, as means for regulating the discharge of melt, compressed air injection nozzles 26 are provided directed at the lower end of the discharge pipe 23. With this construction, a high temperature of 1,300−1,600 °C can be attained in a short time since the electromagnetic radiation of the induction heating act upon the internal heating elements 21. The discharge of the melt can be regulated by the air from the injection nozzles 26.

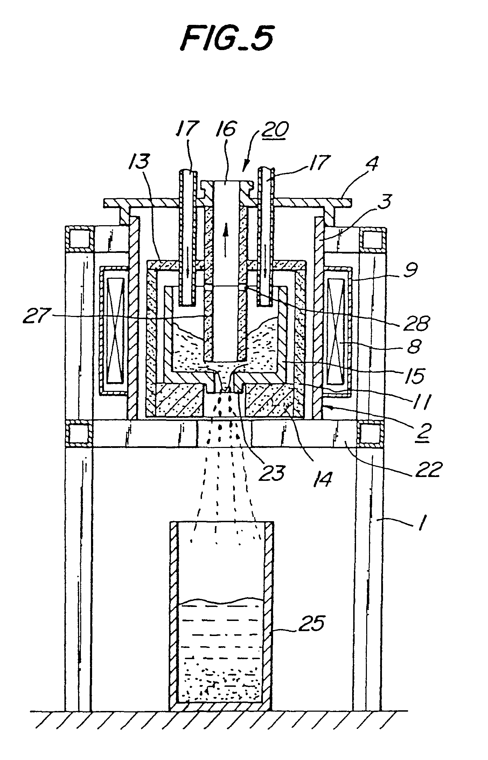

Fig. 5 shows another embodiment for continuously melting waste according to the invention, in which the same parts as those of the embodiment shown in Fig. 3 are denoted by the same reference numerals, and their detailed explanation is not repeated. In this embodiment, a shield 27 is arranged in the waste melting vessel 15 so as to provide a predeterminded space between the sidewall of the waste melting vessel and the shield. At least two waste supply pipes 17 extend through the top 4 and the heat insulating lid 13 into the space between the sidewall of the waste melting vessel 15 and the shield 27. The shield 27 is cylindrical and may be integrally molded with the heat insulating lid 13. The shield communicates vertically with the exhaust gas outled 16 which is a vertical outlet at the centre of the top 4. Therefore, the exhaust gas generated in the melting vessel 15 is discharged to the outside via exhaust vents 28 formed in the upper portion of the shield 27 and the outlet 16. Between the bottom of the melting vessel 15 and the lower end of the shield 27 there is sufficient space for the flow of the melt. The shield 27 may be made of refractory ceramics or heat resistant metal.

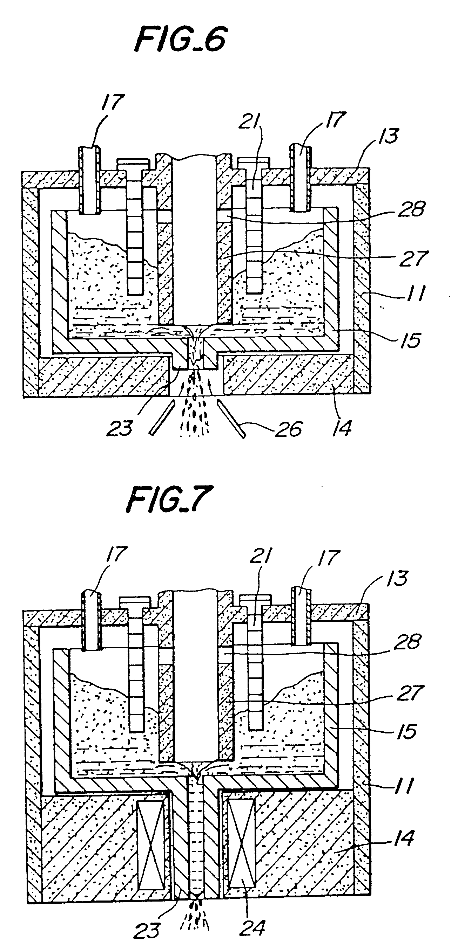

Fig. 6 and Fig. 7 show another embodiment of the continuous waste melting apparatus shown in Fig. 5, in which the same parts as those of the embodiment shown in Fig. 5 are denoted by the same reference numerals, their description not being repeated. In the embodiment shown in Fig. 6, in order to improve efficiency of induction heating in a waste melting vessel 15, rod-shaped internal heating elements 21 made of electrically conductive ceramics are suspended from the heat insulating lid 13 so as to be positioned in the space between the sidewall of the vessel 15 and the shield 27. Furthermore, there is regulating means for regulating discharge or solidification of melt in the melt discharge pipe 23. This regulating means includes air nozzles 26 for directing compressed air at the discharge outlet of the melt discharge pipe 23, to cool and solidify the melt at the discharge outlet. In the embodiment shown in Fig. 7, the rod-shaped internal heating elements 21 made of electrically conductive ceramics are suspended from the heat insulating lid 13 in the same manner as in the embodiment shown in

Fig. 6 and an induction heating coil 24 is provided around the melt discharge pipe 23 in the support 14 to provide a freeze valve type melt regulating means.

In the continuous waste melting apparatus having the above mentioned construction, besides the discharge of the melt is effected continuously, the melt can be discharged intermittently by cooling or induction heating by the melt regulating means.

The invention is not limited to the illustrated embodiments, but these can be variously modified or changed. For instance, in the above embodiments, the support 14 and the furnace body 2 are provided separately but the support 14 may be integral with the sidewall or the bottom plate of the furnace body 2. Further, when the furnace body 2 has high heat insulating properties, the sidewall 11 and the heat insulating lid 13 may be omitted.

It is apparent from the above explanation that by the invention in which the waste melting vessel is made of electrically conductive ceramic material, the apparatus can be used safely even at a high temperature in the range 1,300−1,600 °C and it becomes possible to melt radioactive waste having a melting point higher than 1,300 °C which has hitherto been impossible. No special heating element for heating the container is required because the waste melting vessel istself is heated, and as a result, the apparatus itself becomes simple in construction. By melting and solidifying, the volume of a radioactive waste can safely and effectively be reduced.

## Claims

1. An apparatus for melting waste comprising a furnace body (2) having a sidewall (3) or sidewalls made of nonmetallic material, a top (4) secured gastightly to the upper end of the sidewall, a waste supply inlet (17), a discharge outlet (16) for exhaust gas and a bottom (5, 14, 22), the apparatus further having an induction heating coil (8) outside the sidewall(s), and a waste melting vessel (15) located within said furnace body to be heated by the induction coil (8), characterized in that said waste melting vessel (15) is made of electrically conductive ceramic material.

2. An apparatus as claimed in claim 1, having one or more additional rod-shaped internal heating elements (17) made of conductive ceramic material arranged in the waste melting vessel (15) to be heated by the induction coil (8).

3. An apparatus as claimed in claim 1 or claim 2, wherein the conductive ceramic material is a C-SiC based or a C-$Al_2O_3$ based ceramics.

4. An apparatus as claimed in any one of the preceding claims, wherein an oxygen supply pipe (18) extends through the top (4) of the furnace body (2) into the waste melting vessel (15) to supply oxygen-containing gas.

5. An apparatus as claimed in any one of the preceding claims, wherein means (19) for sensing the melt condition in the waste melting vessel (15) is mounted on the top (4) of the furnace body (2).

6. An apparatus as claimed in any one of the preceding claims wherein the bottom of the furnace body is a movable bottom plate (5) arranged to openably close the bottom of the furnace body (2) and a lift (6) is provided for moving the bottom plate (5) vertically from an elevated position closing the bottom of the furnace body to a descended position for removal and replacement of the waste melting vessel (15).

7. An apparatus as claimed in any one of claims 1 to 5, wherein the waste melting vessel (15) has a melt discharge pipe provided at the bottom thereof, the melt discharge pipe (23) extending downwardly for discharging the melt from the waste melting vessel (15) into another container (25).

8. An apparatus as claimed in claim 7, having means (24, 26) for regulating discharge from the discharge pipe (23) of the melting vessel (15).

9. An apparatus as claimed in claim 8, wherein the discharge regulating means includes a freeze valve having an induction heating coil (24) arranged around the discharge pipe (23).

10. An apparatus as claimed in claim 8, wherein the discharge regulating means includes at least one compressed air injection nozzle (26) directed for cooling the outlet portion of the discharge pipe (23).

11. An apparatus as claimed in any one of claims 7 to 10 wherein a shield (27) is suspended from above into the waste melting vessel (15) to provide a predetermined gap between the sidewall of the waste melting vessel (15) and the shield (27).

12. An apparatus as claimed in claim 11, wherein the shield (27) is cylindrical and fixed to the top (4) of the furnace body (2).

13. An apparatus as claimed in claim 11 or claim 12, wherein the gap between the sidewall of the waste melting vessel (15) and the shield (27) defines an annular melting chamber.

14. An apparatus as claimed in any one of claims 11 to 13 wherein the shield (27) has one or more exhaust vents (28) formed in its upper portion.

**Patentansprüche**

1. Vorrichtung zum Schmelzen von Abfällen mit einem Ofenkörper (2), der eine Seitenwand (3) oder Seitenwände aus einem nicht-metallischen Material, eine mit dem oberen Ende der Seitenwand gasdicht verbundene Oberwand (4), einen Abfalleinlaß (17), einen Rauchgasauslaß (16) und einen Boden (5, 14, 22) aufweist, wobei die Vorrichtung ferner eine Induktionsheizspule (8) außerhalb der Seitenwand bzw. der Seitenwände und ein Abfallschmelzgefäß (15) aufweist, das zur Erhitzung durch die Induktionsspule (8) innerhalb des Ofenkörpers angeordnet ist, dadurch gekennzeichnet, daß das Abfallschmelzgefäß (15) aus einem elektrisch leitenden Keramikmaterial hergestellt ist.

2. Vorrichtung nach Anspruch 1 mit einem oder mehreren zusätzlichen stabförmigen inneren Heizelementen (17) aus elektrisch leitendem Keramikmaterial, die in dem durch die Induktionsspule (8) zu erhitzenden Abfallschmelzgefäß (15) angeordnet sind.

3. Vorrichtung nach Anspruch 1 oder 2, wobei das elektrisch leitende Keramikmaterial ein Keramikmaterial auf der Basis von C-SiC oder C-Al$_2$O$_3$ ist.

4. Vorrichtung nach einem der vorhergehenden Ansprüche, wobei sich ein Sauerstoffzuführrohr (18) durch die Oberwand (4) des Ofenkörpers (2) hindurch in das Abfallschmelzgefäß (15) hinein erstreckt, um ein sauerstoffhaltiges Gas zuzuführen.

5. Vorrichtung nach einem der vorhergehenden Ansprüche, wobei eine Einrichtung (19) zur Ermittlung des in dem Abfallschmelzgefäß (15) herrschenden Schmelzzustandes auf der Oberwand (4) des Ofenkörpers (2) angeordnet ist.

6. Vorrichtung nach einem der vorhergehenden Ansprüche, wobei der Boden des Ofenkörpers von einer beweglichen Bodenplatte (5) gebildet ist, die so angeordnet ist, daß die Unterseite des Ofenkörpers (2) geöffnet werden kann, und wobei eine Hubeinrichtung (6) vorgesehen ist, um die Bodenplatte (5) aus einer angehobenen Stellung, in der sie die Unterseite des Ofenkörpers verschließt, zur Entnahme und zum Austausch des Abfallschmelzgefäßes (15) in eine abgesenkte Stellung vertikal bewegbar ist.

7. Vorrichtung nach einem der Ansprüche 1 bis 5, wobei das Abfallschmelzgefäß (15) an der Unterseite mit einem Austrittsrohr (23) für die Schmelze versehen ist, das sich nach unten erstreckt, um die Schmelze von dem Abfallschmelzgefäß (15) in einen anderen Behälter (25) abzugeben.

8. Vorrichtung nach Anspruch 7 mit Mitteln (24, 26) zum Steuern der Abgabe aus dem Schmelzgefäß (15) durch das Austrittsrohr (23).

9. Vorrichtung nach Anspruch 8, wobei die Mittel zum Steuern der Abgabe ein Erstarrungsventil umfassen, das eine um das Austrittsrohr (23) herum angeordnete Induktionsheizspule (24) aufweist.

10. Vorrichtung nach Anspruch 8, wobei die Mittel zum Steuern der Abgabe mindestens eine Druckluftdüse (26) umfassen, die gegen den Auslaßbereich des Austrittsrohres (23) gerichtet ist, um diesen zu kühlen.

11. Vorrichtung nach einem der Ansprüche 7 bis 10, wobei eine Abschirmung (27) in das Schmelzgefäß (15) hineinragend aufgehängt ist, um einen vorbestimmten Spalt zwischen der Seitenwand des Abfallschmelzgefäßes (15) und der Abschirmung (27) zu bilden.

12. Vorrichtung nach Anspruch 11, wobei die Abschirmung (27) zylindrisch und an der Oberwand (4) des Ofenkörpers (2) befestigt ist.

13. Vorrichtung nach Anspruch 11 oder 12, wobei der Spalt zwischen der Seitenwand des Abfallschmelzgefäßes (15) und der Abschirmung (27) eine ringförmige Schmelzkammer bildet.

14. Vorrichtung nach einem der Ansprüche 11 bis 13, wobei die Abschirmung (27) im oberen Bereich eine oder mehrere Austrittsöffnungen (28) aufweist.

## Revendications

1. Appareil pour fondre des déchets comprenant un corps de four (2) ayant une paroi latérale (3) ou des parois latérales en un matériau non métallique, un sommet (4) fixé de manière étanche aux gaz à l'extrémité supérieure de la paroi latérale, une entrée (17) d'alimentation des déchets, une sortie d'évacuation (16) des gaz d'échappement et un fond (5, 14, 22), l'appareil ayant de plus une bobine de chauffage par induction (8) en dehors de la ou des parois latérales et un récipient de fusion des déchets (15) placé dans ledit corps de four pour être chauffé par la bobine d'induction (8), caractérisé en ce que ledit récipient de fusion des déchets (15) est fait en une matière céramique électriquement conductrice.

2. Appareil selon la revendication 1, ayant un ou plusieurs éléments chauffants internes additionnels en forme de tige (17) faits en une matière céramique conductrice agencés dans le récipient (15) de fusion des déchets à chauffer par le bobine d'induction (8).

3. Appareil selon la revendication 1 ou la revendication 2, où la matière céramique conductrice est une céramique 2, où la matière céramique conductrice est une céramique à base de C-SiC ou à base de $C-Al_2O_3$.

4. Appareil selon l'une quelconque des revendications précédentes, où une tube (18) d'alimentation d'oxygène traverse le sommet (4) du corps (2) du four dans le récipient (15) de fusion des déchets pour fournir un gaz contenant de l'oxygène.

5. Appareil selon l'une quelconque des revendications précédentes où un moyen (19) pour détecter la condition du produit fondu dans le récipient (15) de fusion des déchets est monté au sommet (4) du corps (2) du four.

6. Appareil selon l'une quelconque des revendications précédentes, où le fond du corps du four est une plaque mobile de fond (5) agencée pour ouvrir, de manière ouvrable, le fond du corps (2) du four et un élévateur (6) est prévu pour déplacer la plaque de fond (5) verticalement, d'une position élevée fermant le fond du corps du four à une position descendue pour l'enlèvement et le remplacement du récipient (15) de fusion des déchets.

7. Appareil selon l'une quelconque des revendications 1 à 5, où le récipient (15) de fusion des déchets a un tube d'évacuation du produit fondu qui est prévu en son fond, le tube (23) d'évacuation du produit fondu s'étendant vers le bas pour évacuer le produit fondu du récipient (15) de fusion des déchets dans un autre conteneur (25).

8. Appareil selon la revendication 7, ayant un moyen (24, 26) pour réguler l'évacuation du tube d'évacuation (23) du récipient (15) de fusion.

9. Appareil selon la revendication 8, où le moyen de régulation de l'évacuation comprend une vanne à congélation ayant une bobine de chauffage par induction (24) agencée autour du tube d'évacuation (23).

10. Appareil selon la revendication 8, où le moyen de régulation d'évacuation comprend au moins une tubulure (26) d'injection d'air comprimé dirigée pour refroidir la portion de sortie du tube d'évacuation (23).

11. Appareil selon l'une des revendications 7 à 10, où un blindage (27) est suspendu du dessus, dans la récipient (15) de fusion des déchets, pour former un espace prédéterminé entre la paroi latérale du récipient (15) de fusion des déchets et le blindage (27).

12. Appareil selon la revendication 11, où le blindage (27) est cylindrique et est fixé au sommet (4) du corps (2) du four.

13. Appareil selon la revendication 11 ou la revendication 12, où l'espace entre la paroi latérale du récipient (15) de fusion des déchets et le blindage (27) définit une chambre annulaire de fusion.

14. Appareil selon l'une des revendications 11 à 13 où le blindage (27) a un ou plusieurs évents d'échappement (28) qui sont formés à sa portion supérieure.

# FIG.1

# FIG_2

# FIG.3

# FIG.4

# FIG_5

EP 0196809 B1

# FIG_6

# FIG_7